(19) Europäisches Patentamt
European Patent Office
Office européen des brevets

(11) **EP 4 482 050 A1**

(12) **EUROPEAN PATENT APPLICATION**
published in accordance with Art. 153(4) EPC

(43) Date of publication:
**25.12.2024 Bulletin 2024/52**

(21) Application number: **23769640.6**

(22) Date of filing: **09.03.2023**

(51) International Patent Classification (IPC):
**H04B 7/06** (2006.01)

(52) Cooperative Patent Classification (CPC):
**H04B 7/06; H04L 5/00**

(86) International application number:
**PCT/CN2023/080369**

(87) International publication number:
**WO 2023/174134 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.03.2022 CN 202210271156**

(71) Applicant: **Huawei Technologies Co., Ltd.
Shenzhen, Guangdong 518129 (CN)**

(72) Inventors:
• **LI, Ting
Shenzhen, Guangdong 518129 (CN)**
• **WANG, Xiaohan
Shenzhen, Guangdong 518129 (CN)**
• **JIN, Huangping
Shenzhen, Guangdong 518129 (CN)**

(74) Representative: **Gill Jennings & Every LLP
The Broadgate Tower
20 Primrose Street
London EC2A 2ES (GB)**

(54) **CHANNEL STATE INFORMATION TRANSMISSION METHOD, AND COMMUNICATION APPARATUS AND COMMUNICATION DEVICE**

(57) This application provides a channel state information transmission method, a communication apparatus, and a communication device. The method includes: obtaining channel state information corresponding to N port groups, where the channel state information includes first channel state information corresponding to each of the N port groups, and N is an integer greater than 1; and sending first information and second information, where the first information includes first indication information, the first indication information indicates that the second information includes first channel state information corresponding to each of K port groups, the N port groups include the K port groups, and K is a positive integer less than N. In this way, feedback overheads of the channel state information are reduced, and air interface resource utilization is improved.

200

S201: Obtain channel state information of N port groups, where the channel state information includes first channel state information of each of the N port groups

S202: Send first information and second information, where the first information includes first indication information, the second information includes first channel state information of each of K port groups, and the first indication information indicates that the second information includes the first channel state information of each of the K port groups

FIG. 2

# Description

This application claims priority to Chinese Patent Application No. 202210271156.8, filed with the China National Intellectual Property Administration on March 18, 2022 and entitled "CHANNEL STATE INFORMATION TRANSMISSION METHOD, COMMUNICATION APPARATUS, AND COMMUNICATION DEVICE", which is incorporated herein by reference in its entirety.

## TECHNICAL FIELD

This application relates to the communication field, and more specifically, to a channel state information transmission method, a communication apparatus, and a communication device.

## BACKGROUND

In a mobile communication system, a manner in which a terminal device sends channel state information (channel state information, CSI) to an access network device is mainly used to enable the access network device to obtain channel state information, for example, information such as a channel matrix, a precoding matrix, or a channel quality indicator, of a downlink channel from the access network device to the terminal device. In this way, downlink data or information is processed based on the channel state information, to overcome channel interference. Currently, the channel matrix or the precoding matrix is mainly represented by using a linear combination of a plurality of basis vectors in a group of basis vectors, or by using a bilinear combination of a plurality of basis vector pairs determined based on two groups of basis vectors.

A manner of data transmission for the terminal device by a plurality of transmission points in a joint manner is a manner of improving a data throughput of the terminal device. In the joint transmission manner, the terminal device sends channel matrix components or precoding matrix components corresponding to the plurality of transmission points together. For a channel matrix component or a precoding matrix component corresponding to each transmission point, a manner similar to that of a single transmission point may be used, and a channel submatrix or a precoding submatrix corresponding to each transmission point is represented by using a plurality of basis vectors or a linear combination of a plurality of basis vector pairs. However, in an existing multi-transmission point joint transmission mechanism, efficiency of feeding back channel state information by a terminal device is not high, and a problem of a waste of feedback overheads exists. Therefore, further optimization is urgently needed.

## SUMMARY

This application provides a channel state information transmission method, a communication apparatus, and a communication device, to reduce channel state information feedback overheads and improve resource utilization.

According to a first aspect, a channel state information CSI transmission method is provided. The method includes: first obtaining CSI of N port groups, where the CSI includes first CSI of each of the N port groups, and N is an integer greater than 1; and then sending first information and second information, where the first information includes first indication information, the second information includes first CSI of each of K port groups, the first indication information indicates that the second information includes the first CSI of each of the K port groups, the N port groups include the K port groups, and K is a positive integer less than N.

By way of example and not limitation, the first CSI is a PMI (precoding matrix indicator, PMI) component of one port group in a precoding matrix of a plurality of port groups.

According to the foregoing solution, a terminal device may notify a network side of a port group corresponding to a PMI component fed back by the terminal device, and the network side determines, based on a mapping relationship between the port group and a transmission point, a transmission point corresponding to the PMI component, so that a network device can determine a size of the CSI. In this way, CSI fed back by the terminal device is effectively obtained. In this way, the terminal device may flexibly feed back the CSI to a network side transmission point based on an information amount of valid CSI obtained through measurement. The network side transmission point can also determine the size of the CSI based on an indication of the terminal device. This improves CSI feedback efficiency of the terminal device, reduces unnecessary CSI feedback overheads, and improves air interface resource utilization.

With reference to the first aspect, in some implementations of the first aspect, the first information further includes second CSI of the N port groups that is in the CSI.

By way of example and not limitation, the second CSI includes but is not limited to one or more of a channel quality indicator (channel quality indicator, CQI), a CSI-reference signal (CSI-reference signal, CSI-RS) resource indicator (CSI-RS resource indicator, CRI), a layer indicator (layer indicator, LI), a rank indicator (rank indicator, RI), reference signal received power (reference signal receiving power, RSRP), and a signal to interference plus noise ratio (signal to interference plus noise ratio, SINR).

By way of example and not limitation, the second CSI may be referred to as a part 1 (Part 1) of the CSI, and the first CSI may be referred to as a part 2 (Part 2) of the CSI.

According to the foregoing solution, the terminal device may feed back, in the first information, a part of the CSI (namely, the second CSI) in the CSI of the N port groups, and the first information includes the first indication information indicating that the second information includes first CSI of each of the K port groups, so that the network side transmission point can determine an information amount of the second information based on the first indication information. In this way, first CSI fed back by the terminal device is correctly obtained, thereby reducing CSI feedback overheads and improving resource utilization.

In an implementation, that the first indication information indicates that the second information includes first CSI of each of K port groups includes:

The first indication information includes N information bits, the N information bits correspond to the N port groups, and one information bit indicates that the second information includes or does not include first CSI of a corresponding port group, where information bits that correspond to the K port groups in the N information bits indicate that the second information includes the first CSI of each of the K port groups.

In another implementation, that the first indication information indicates that the second information includes first CSI of each of K port groups includes: The first indication information includes N indication fields, the N indication fields correspond to the N port groups, one indication field indicates a quantity of first parameters in first CSI that is of a corresponding port group and that is included in the second information, and the first parameter is a linear combination coefficient of the port group, where a quantity of first parameters indicated by each of indication fields corresponding to the K port groups is greater than 0.

In still another implementation, that the first indication information indicates that the second information includes first CSI of each of K port groups includes: The first indication information includes identification information of each of the K port groups.

In still another implementation, that the first indication information indicates that the second information includes first CSI of each of K port groups includes: The first indication information includes identification information of each of R port groups, where the R port groups are port groups other than the K port groups in the N port groups.

The foregoing examples provide four implementations of the first indication information, so that the first indication information can indicate, in the first information, a port group corresponding to first CSI included in the second information, the information amount of the second information can be determined based on the first indication information, and the CSI can be flexibly fed back to the network side transmission point. The network side transmission point can also determine the size of the CSI based on the indication of the terminal device. This improves the CSI feedback efficiency of the terminal device, to reach an objective of reducing the CSI feedback overheads and improving the air interface resource utilization. It should be understood that this application is not limited to the foregoing three implementations. The first indication information may alternatively indicate, in another manner, the port group corresponding to the first channel state information included in the second information.

With reference to the first aspect, in some implementations of the first aspect, the first information and the second information are separately encoded.

According to the foregoing solution, the first information and the second information are separately encoded, so that the network side transmission point may first decode the first information to obtain the first indication information, determine the size of the CSI based on the indication of the terminal device, and then decode the second information, to reach an objective of reducing the CSI feedback overheads and improving the air interface resource utilization.

With reference to the first aspect, in some implementations of the first aspect, the method further includes: determining, based on channel quality corresponding to each of the N port groups, that the second information includes the first CSI of each of the K port groups.

According to the foregoing solution, the terminal device may specifically determine, based on channel quality corresponding to a port group, whether to feed back CSI of the port group.

According to a second aspect, a channel state information CSI transmission method is provided. The method includes: receiving first information and second information, where the first information includes first indication information, the first indication information indicates that the second information includes first CSI of each of K port groups in N port groups, N is an integer greater than 1, and K is a positive integer less than N; and determining, based on the first information, that the second information includes the first CSI of each of the K port groups.

With reference to the second aspect, in some implementations of the second aspect, the first information further includes second CSI of the N port groups that is in CSI.

With reference to the second aspect, in some implementations of the second aspect, that the first indication information indicates that the second information includes first CSI of each of K port groups includes: The first indication information includes N information bits, the N information bits correspond to the N port groups, and one information bit indicates that the second information includes or does not include first CSI of a corresponding port group, where information bits that correspond to the K port groups in the N information bits indicate that the second information includes first CSI of each of the K port groups.

With reference to the second aspect, in some implementations of the second aspect, that the first indication information indicates that the second information includes first CSI of each of K port groups includes: The first indication information includes N indication fields, the N indication fields correspond to the N port groups, one indication field indicates a quantity of first parameters in first CSI that is of a corresponding port group and that is included in the second information, and the first parameter is a linear combination coefficient of the port group, where a quantity of first parameters indicated by each of indication fields corresponding to the K port groups is greater than 0.

With reference to the second aspect, in some implementations of the second aspect, that the first indication information indicates that the second information includes first CSI of each of K port groups includes: The first indication information includes identification information of each of the K port groups, or the first indication information includes identification information of each of R port groups, where the R port groups are port groups other than the K port groups in the N port groups.

With reference to the second aspect, in some implementations of the second aspect, the first information and the second information are separately encoded.

With reference to the second aspect, in some implementations of the second aspect, the first information further includes the second CSI of the N port groups that is in the CSI, the first CSI includes a precoding matrix indicator PMI information component, and the second CSI includes one or more of reference signal resource indicator CRI information, rank indicator RI information, or channel quality indicator CQI information.

According to a third aspect, a communication apparatus is provided. In a design, the apparatus may include modules for performing the method/operations/-steps/actions described in the first aspect. The modules may be hardware circuits, may be software, or may be implemented by using a combination of a hardware circuit and software. In a design, the apparatus includes a processing unit, configured to obtain channel state information CSI of N port groups, where the CSI includes first CSI of each of the N port groups, and N is an integer greater than 1; and a transceiver unit, configured to send first information and second information, where the first information includes first indication information, the second information includes first CSI of each of K port groups, the first indication information indicates that the second information includes the first CSI of each of the K port groups, the N port groups include the K port groups, and K is a positive integer less than N.

With reference to the third aspect, in some implementations of the third aspect, the first information further includes second CSI of the N port groups that is in the CSI.

In an implementation, that the first indication information indicates that the second information includes the first CSI of each of the K port groups includes: The first indication information includes N information bits, the N information bits correspond to the N port groups, and one information bit indicates that the second information includes or does not include first CSI of a corresponding port group, where information bits that correspond to the K port groups in the N information bits indicate that the second information includes first CSI of each of the K port groups.

In another implementation, that the first indication information indicates that the second information includes the first CSI of each of the K port groups includes: The first indication information includes N indication fields, the N indication fields correspond to the N port groups, one indication field indicates a quantity of first parameters in first CSI that is of a corresponding port group and that is included in the second information, and the first parameter is a linear combination coefficient of the port group, where a quantity of first parameters indicated by each of indication fields corresponding to the K port groups is greater than 0.

In still another implementation, that the first indication information indicates that the second information includes the first CSI of each of the K port groups includes: The first indication information includes identification information of each of the K port groups, or the first indication information includes identification information of each of R port groups, where the R port groups are port groups other than the K port groups in the N port groups.

With reference to the third aspect, in some implementations of the third aspect, the first information and the second information are separately encoded.

With reference to the third aspect, in some implementations of the third aspect, the processing unit is further configured to determine, based on channel quality corresponding to each of the N port groups, that the second information includes the first CSI of each of the K port groups.

With reference to the third aspect, in some implementations of the third aspect, the first information further includes the second CSI of the N port groups that is in the CSI, the first CSI includes a precoding matrix indicator PMI information component, and the second CSI includes one or more of reference signal resource indicator CRI information, rank indicator RI information, or channel quality indicator CQI information.

According to a fourth aspect, a communication apparatus is provided. In a design, the apparatus may include modules for performing the method/operations/-steps/actions described in the first aspect. The modules may be hardware circuits, may be software, or may be implemented by using a combination of a hardware circuit and software. In a design, the apparatus includes a transceiver unit, configured to receive first information and second information, where the first information includes first indication information, the first indication information indicates that the second information includes first channel state information CSI of each of K port groups in N port groups, N is an integer greater than 1, and K is a positive integer less than N; and a processing unit, configured to determine, based on the first information, that the second information includes the first CSI of each of the K port groups.

With reference to the fourth aspect, in some implementations of the fourth aspect, the first information further includes second CSI of the N port groups that is in CSI.

In an implementation, the first indication information includes N information bits, the N information bits correspond to the N port groups, and one information bit indicates that the second information includes or does not include first CSI of a corresponding port group, where information bits that correspond to the K port groups in the N information bits indicate that the second information includes first CSI of each of the K port groups.

In another implementation, the first indication information includes N indication fields, the N indication fields correspond to the N port groups, one indication field indicates a quantity of first parameters in first CSI that is of a corresponding port group and that is included in the second information, and the first parameter is a linear combination coefficient of the port group, where a quantity of first parameters indicated by each of indication fields corresponding to the K port groups is greater than 0.

In still another implementation, the first indication information includes identification information of each of the K port groups, or the first indication information includes identification information of each of R port groups, where the R port groups are port groups other than the K port groups in the N port groups.

With reference to the fourth aspect, in some implementations of the fourth aspect, the first information further includes the second CSI of the N port groups that is in the CSI, the first CSI includes a precoding matrix indicator PMI information component, and the second CSI includes one or more of reference signal resource indicator CRI information, rank indicator RI information, or channel quality indicator CQI information.

According to a fifth aspect, a communication apparatus is provided, including a processor. The processor may implement the method according to any one of the first aspect and the possible implementations of the first aspect. Optionally, the communication apparatus further includes a memory. The processor is coupled to the memory, and may be configured to execute instructions in the memory, to implement the method according to any one of the first aspect and the possible implementations of the first aspect. Optionally, the communication apparatus further includes a communication interface, and the processor is coupled to the communication interface. In this disclosure, the communication interface may be a transceiver, a pin, a circuit, a bus, a module, or a communication interface of another type. This is not limited.

According to the communication apparatus provided in the fifth aspect, in an implementation, when the communication apparatus is a terminal device, the communication interface may be a transceiver. Optionally, the transceiver may be a transceiver circuit. In another implementation, when the communication apparatus is a chip configured in the terminal device, the communication interface may be an input/output interface.

According to a sixth aspect, a communication apparatus is provided, including a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect and the possible implementations of the second aspect. Optionally, the communication apparatus further includes a communication interface, and the processor is coupled to the communication interface.

According to the communication apparatus provided in the sixth aspect, in an implementation, when the communication apparatus is a network device, the communication interface may be a transceiver. Optionally, the transceiver may be a transceiver circuit. In another implementation, when the communication apparatus is a chip configured in the network device, the communication interface may be an input/output interface.

Optionally, the input/output interface may include an input circuit and an output circuit.

In a specific implementation process, the input circuit may be an input pin, the output circuit may be an output pin, and the processor may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this disclosure.

According to a seventh aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect to the third aspect and the possible implementations of the first aspect to the third aspect.

According to a ninth aspect, a communication system is provided, including at least one communication apparatus provided in the third aspect or the fifth aspect and at least one communication apparatus provided in the fourth aspect or the sixth aspect.

## BRIEF DESCRIPTION OF DRAWINGS

FIG. 1 is a diagram of a communication system according to an embodiment of this application;
FIG. 2 is a schematic flowchart of a channel state information transmission method according to an embodiment of this application;
FIG. 3 is a schematic block diagram of an example of a communication apparatus according to an embodiment of this application;
FIG. 4 is a diagram of a structure of an example of a terminal device according to an embodiment of this application; and
FIG. 5 is a diagram of a structure of an example of a network device according to an embodiment of this application.

## DESCRIPTION OF EMBODIMENTS

The following describes technical solutions of this application with reference to accompanying drawings.

To make the objectives, technical solutions, and advantages of embodiments of this application clearer, the following clearly describes the technical solutions in embodiments of this application with reference to the accompanying drawings in embodiments of this application. It is clear that, the described embodiments are merely some of rather than all of embodiments of this application. All other embodiments obtained by a person of ordinary skill in the art based on embodiments of this application without creative efforts shall fall within the protection scope of this application.

In the specification, the claims, and the accompanying drawings of embodiments of this application, the terms "first", "second", and the like are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. In addition, the terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system such as a 6th generation mobile communication system. This is not limited in this application.

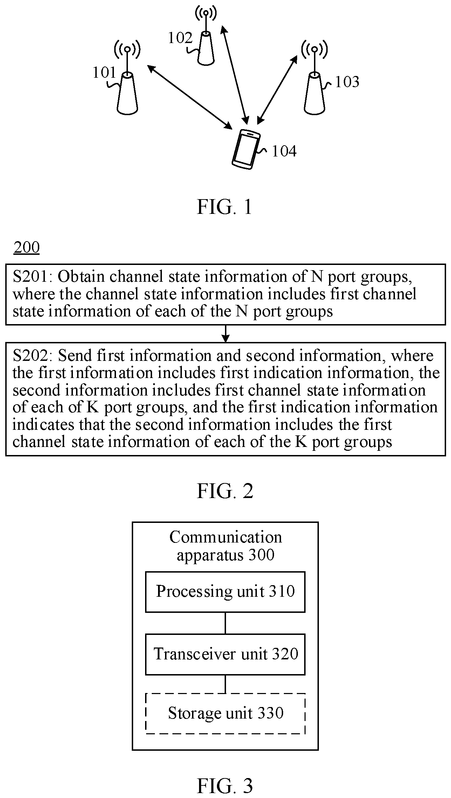

FIG. 1 is a diagram of a communication system 100 applicable to an embodiment of this application. The communication system 100 may include a plurality of transmission points, such as a transmission point 101, a transmission point 102, and a transmission point 103 shown in FIG. 1. The communication system may further include at least one terminal device, such as a terminal device 104 shown in FIG. 1.

The plurality of transmission points shown in FIG. 1 may communicate with the terminal device 104 in a multi-point joint manner, so that a data throughput can be improved. The plurality of transmission points may communicate with the terminal device in a coherent joint transmission (coherent joint transmission, CJT) manner. In the CJT joint manner, the plurality of transmission points simultaneously provide network services for the terminal device. A network may configure the plurality of transmission points to send reference signals to the terminal device, and enable coherent joint transmission of the plurality of transmission points based on relative channel state information between the transmission points that is measured and fed back by the terminal device.

An access network device in embodiments of this application may be a device that has a wireless transceiver function in an access network, and may be referred to as a radio access network (radio access network, RAN) device. The device includes but is not limited to: a base station, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), an access point (access point, AP) in a wireless fidelity (wireless fidelity, Wi-Fi) system, a wireless relay node, or a wireless backhaul node. A specific form of a network device is not limited in this application.

The following describes related technologies and terms in embodiments of this application.

1. Transmission point

The transmission point in embodiments of this application may be a transmission point (transmission point) that only has an information sending function, or may be a transmission reception point (transmission reception point, TRP) that has an information sending function and receiving function.

For example, the transmission point may be a radio access network device, the transmission point may be an antenna panel of a radio access network device or referred to as an antenna port group, or the transmission point may be a baseband unit (baseband unit, BBU), a remote radio unit (remote radio unit, RRU), a distributed unit (distributed unit, DU), or the like of a network device. A specific form of the transmission point is not limited in this application.

In a scenario in which a plurality of transmission points operate in a joint manner, a network side transmission point may configure the plurality of transmission points to send reference signals (for example, the reference signals may be channel state information-reference signals (channel state information-reference signals, CSI-RSs)) on a plurality of port groups. One transmission point corresponds to one port group. A terminal device may receive the reference signals from the plurality of port groups, and measure the reference signals of the plurality of port groups, to obtain channel state information of the plurality of port groups. The port group may be referred to as a reference signal port group, for example, a CSI-RS port group. The plurality of transmission points corresponding to the plurality of port groups may send reference signals on different reference signal resources, in other words, the reference signals sent by the plurality of transmission points may be carried on different reference signal port group resources in different reference signal resources, or may be sent on different reference signal port group resources in a same reference signal resource. In other words, one transmission point may send a reference signal on one reference signal port group resource through one port group.

2. Channel state information (channel state information, CSI)

The terminal device may obtain CSI by measuring a reference signal from the network side transmission point, where the CSI represents a channel feature of a communication channel between the terminal device and the network side transmission point.

For example, the terminal device may obtain downlink CSI by measuring a CSI-RS or a synchronization signal and physical broadcast channel (physical broadcast channel, PBCH) block (synchronization signal and PBCH block, SSB) sent by the network side transmission point.

The CSI may include but is not limited to one or more of a channel quality indicator (channel quality indicator, CQI), a PMI, a channel state information-reference signal (CSI-reference signal, CSI-RS) resource indicator (CSI-RS resource indicator, CRI), a layer indicator (layer indicator, LI), a rank indicator (rank indicator, RI), reference signal received power (reference signal receiving power, RSRP), and a signal to interference plus noise ratio (signal to interference plus noise ratio, SINR), where the CQI indicates a modulation scheme, a target code rate, and a transport block size that can be supported by the channel on a premise of ensuring a predefined block error ratio (block error ratio, BLER). The PMI indicates a precoding matrix that the terminal device recommends, based on measurement, the network side transmission point to use in downlink transmission, and the precoding matrix indicated by the PMI may represent channel information. The CRI indicates an index of a CSI-RS resource, and may be used to select a communication beam. The RI indicates a quantity of layers recommended by the terminal device for the downlink transmission. The LI indicates a layer with best channel quality.

The terminal device may send the obtained CSI to the network side transmission point, so that the network side transmission point may process, based on the CSI, information/data to be sent to the terminal device, to reduce attenuation impact of the channel on the information/data.

3. Precoding matrix indicator (precoding matrix indicator, PMI)

The PMI may indicate a precoding matrix or indicate a channel matrix. The precoding matrix is a primary eigenvector of a transmit end of a network side transmission point corresponding to the channel matrix, and is used to provide guidance for the network side transmission point to precode downlink data. PMI feedback means that the terminal device determines the PMI based on a codebook and reports the PMI to the network side transmission point. For example, for a subband in frequency domain, the terminal device may represent the precoding matrix or the channel matrix based on a space domain (angle domain) compression mechanism by using a linear combination of several discrete fourier transform (discrete fourier transform, DFT) basis vectors in space domain. Further, the terminal device may alternatively represent the precoding matrix or the channel matrix based on frequency domain correlations between amplitudes and phase coefficients of channel matrices of different subbands in frequency domain by using a bilinear combination of several space domain DFT basis vectors and several frequency domain DFT basis vectors. To fully utilize channel sparsity in space domain and frequency domain, and further improve PMI feedback precision, the terminal device may further determine the PMI by using a codebook of a characteristic subspace beam obtained through statistics collection, and approximate a primary eigenvector of a downlink channel or approximate a downlink channel matrix by using a linear combination of characteristic subspace beams obtained through long-periodicity statistics collection. The codebook may be similar to that a group of characteristic subspace beams obtained through statistics collection is used in space domain and frequency domain separately to represent the precoding matrix or the channel matrix in a form of a bilinear combination, or that a group of space-frequency joint characteristic subspace beams is used in space domain and frequency domain in a joint manner to represent the precoding matrix or the channel matrix by using a linear combination. In conclusion, currently, the precoding matrix or the channel matrix is represented mainly by using a linear combination of a plurality of basis vectors in a group of basis vectors, or a bilinear combination of a plurality of basis vector pairs determined based on two groups of basis vectors. The terminal device directly or indirectly indicates, based on the PMI, a basis vector group and a linear combination coefficient corresponding to a basis vector or a basis vector pair. The network side transmission point restores the precoding matrix or the channel matrix based on the PMI.

For example, the terminal device may represent the precoding matrix in a form of a bilinear combination of a spatial domain basis vector and a frequency domain basis vector. For example, transmit ports of the network side transmission point in two polarization directions are considered. The precoding matrix includes precoding matrix sub-blocks in the two polarization directions. The terminal device shares one group of spatial domain basis vectors in the two polarization directions. Precoding matrix sub-blocks in each polarization direction may be represented in a form of a bilinear combination of L spatial domain basis vectors and M frequency domain basis vectors. In other words, a precoding matrix W may be represented in a form of the bilinear combination of the L spatial domain basis vectors and the M frequency domain basis vectors. L and M are positive integers. Each spatial domain basis vector corresponds to a transmit beam of the network side transmission point. The spatial domain basis vector may be a column vector in a two-dimensional DFT matrix or a column vector in an oversampled two-dimensional DFT matrix, or may be an eigenvector obtained through eigenvalue decomposition on channel space domain statistics. Each frequency domain basis vector corresponds to one frequency band change mode of the channel. The frequency band change mode may indicate a change rule of the channel in each frequency domain unit of an entire frequency band. The frequency domain basis vector may be a column vector in a one-dimensional DFT matrix, or a column vector in an oversampled one-dimensional DFT matrix, or may be an eigenvector obtained through eigenvalue decomposition on channel frequency domain statistics. Values of a quantity L of the spatial domain basis vectors and a quantity M of the frequency domain basis vectors may be indicated by the network side transmission point to the terminal device by using downlink signaling, may be predefined in a protocol, or may be determined by the terminal device. The terminal device indicates, by using a PMI, to indicate the values of L and M to the network side transmission point.

The L spatial domain basis vectors and the M frequency domain basis vectors may be integrated into L×M basis vector pairs, the precoding matrix sub-blocks in each polarization direction may be represented by using a linear combination of the L×M basis vector pairs, and each basis vector pair in each polarization direction corresponds to one linear combination coefficient. For example, a precoding matrix sub-block in each polarization direction is a matrix with P rows and Q columns, P and Q are integers greater than 1, P is a quantity of antenna ports in each polarization direction, and Q is a quantity of frequency domain units included in one subband. Each of the L spatial domain basis vectors may be one column vector with P elements, each of the M frequency domain basis vectors may be one row vector with Q elements, L is less than or equal to P, and M is less than or equal to Q.

For example, a spatial domain basis vector may be denoted as $\boldsymbol{s}_l = \begin{bmatrix} s_1^l & \ldots & s_P^l \end{bmatrix}^T$, a frequency domain basis vector may be denoted as $\boldsymbol{f}_m = \begin{bmatrix} f_1^m & \ldots & f_Q^m \end{bmatrix}$, and a space-frequency basis matrix $W_{l,m}$ may be determined based on a basis vector pair formed by combining a spatial domain basis vector and a frequency domain basis vector:

$$W_{l,m} = \boldsymbol{s}_l \times \boldsymbol{f}_m = \begin{bmatrix} s_1^l f_1^m & \ldots & s_1^l f_Q^m \\ M & O & M \\ s_P^l f_1^m & \ldots & s_P^l f_Q^m \end{bmatrix}$$

The L spatial domain basis vectors and the M frequency domain basis vectors may be integrated into the L×M basis vector pairs, and a space-frequency basis matrix $W_{l,m}$ may be determined based on a spatial domain basis vector and a frequency domain basis vector in each basis vector pair, where $l$=1, ..., L, and m=1, ..., M, that is, the terminal device may obtain L×M space-frequency basis matrices $W_{l,m}$. The terminal device may represent the precoding matrix sub-block in each polarization direction by using a linear combination of the L×M space-frequency basis matrices $W_{l,m}$, to determine a precoding matrix W. For each of the two polarization directions, each space-frequency basis matrix corresponds to one linear combination coefficient, that is, there are a total of 2L×M linear combination coefficients. In other words, the terminal device may send the PMI to the radio access network device. The PMI may indicate the precoding matrix by indicating the L spatial domain basis vectors, the M frequency domain basis vectors, and the 2L×M linear combination coefficients that correspond to precoding, so that the radio access network device may restore, after receiving the PMI, based on the L spatial domain basis vectors, the M frequency domain basis vectors, and the 2L×M linear combination coefficients, the precoding matrix indicated by the terminal device.

It should be understood that, for ease of understanding, in this application, the foregoing provides an example of a mathematical expression form of a frequency domain basis vector, a spatial domain basis vector, and a space-frequency basis matrix. In specific implementation, each vector and matrix may alternatively exist in another mathematical expression form. For example, the foregoing vector represented in a form of a column vector may also be represented in a form of a row vector, and/or the vector represented in a form of a row vector may also be represented in a form of a column vector. An operation between vectors may be implemented through mathematical transformation in a manner like transposition or conjugate transposition. This is not limited in this application. A bilinear combination manner implemented by using a plurality of variant expressions should also fall within the protection scope of this application.

The terminal device may directly or indirectly indicate the L spatial domain basis vectors and the M frequency domain basis vectors based on the PMI, for example, directly indicate identification information of the L spatial domain basis vectors and the M frequency domain basis vectors, or indirectly indicate the L spatial domain basis vectors in a plurality of candidate spatial domain basis vectors and the M frequency domain basis vectors in a plurality of candidate frequency domain basis vectors in a form of a bitmap or a combinatorial number. Alternatively, when configuring the terminal device to feed back CSI, the radio access network device may configure the values of L and M, the L spatial domain basis vectors, and the M spatial domain basis vectors (for example, the terminal device may be notified of a used basis vector by indicating identification information of the basis vector, but this application is not limited thereto). In this case, the PMI fed back by the terminal device may indicate the linear combination coefficient but does not indicate the basis vector.

In a PMI feedback manner for reducing feedback overheads, the terminal device may select X non-zero linear combination coefficients with large amplitudes from the 2L×M linear combination coefficients and feed back the X non-zero linear combination coefficients to the radio access network device. The terminal device may indicate locations of the X non-zero linear combination coefficients that are fed back based on a bitmap (bitmap) including 2L×M bits, where X is a positive integer. One bit in the bitmap corresponds to a linear combination coefficient of one basis vector pair. That the bit indicates "1" indicates that the terminal device feeds back the linear combination coefficient corresponding to the bit, and that the bit indicates "0" indicates that the terminal device does not feed back the linear combination coefficient; or vice versa. This is not limited in this application. Optionally, the radio access network device may further indicate a maximum quantity $X_{tot}$ of linear combination coefficients fed back by the terminal device, a quantity of linear combination coefficients fed back by the terminal device to the radio access network device does not exceed $X_{tot}$, and $X_{tot}$ is a positive integer. In this way, PMI feedback overheads of the terminal device are controlled.

In the scenario in which the plurality of transmission points operate in the joint manner, the network side transmission point may configure the plurality of transmission points to send the reference signals to the terminal device on the plurality of port groups. The terminal device obtains, through measurement, CSI corresponding to the plurality of transmission points, that is, the CSI of the plurality of port groups, and feeds back the CSI to the network side transmission point together, that is, feeds back the CSI of the plurality of port groups to the network side transmission point. In this case, the PMI may indicate a precoding matrix determined by the terminal device based on a channel matrix of the plurality of transmission points on each subband. The precoding matrix includes a plurality of precoding submatrices, and each transmission point corresponds to one precoding submatrix. Alternatively, the PMI indicates a channel matrix of the plurality of transmission points, the channel matrix includes a plurality of channel submatrices, and each transmission point corresponds to one channel submatrix. This is not limited in this application. In the scenario in which the plurality of transmission points operate in the joint manner, the terminal device feeds back, based on the PMI to the network side transmission point, the CSI corresponding to the plurality of transmission points together. The PMI includes a plurality of PMI components, and each PMI component corresponds to one transmission point. The terminal device may determine, in a manner similar to that described above, a PMI component corresponding to each precoding submatrix or channel submatrix. For example, each of the plurality of PMI components includes one bitmap, indicating locations of linear combination coefficients of corresponding transmission points that are fed back and not fed back by the terminal device. When the network side transmission point does not configure, for the terminal device, a basis vector and/or a quantity of basis vectors corresponding to each transmission point, each PMI component further indicates a quantity of basis vectors and a basis vector corresponding to a corresponding transmission point. The terminal device further needs to report a total quantity of linear combination coefficients corresponding to all transmission points.

It should be noted that, in the scenario in which the plurality of transmission points operate in the joint manner, the terminal device feeds back the CSI to the network side transmission point. In specific implementation, the CSI may be fed back to one transmission point, or the CSI may be fed back to the plurality of transmission points. This is not limited in this application.

However, for the scenario in which the plurality of transmission points operate in the joint manner, it is found in practice that channel quality of one or more transmission points may be poor. Even if the terminal device feeds back, to the network side transmission point, CSI corresponding to the transmission point, a benefit of performing joint transmission by the network side transmission point through the transmission point is small. In other words, whether to accurately feed back the CSI of the transmission point has little impact on overall performance of systematic joint transmission. A problem of a waste of CSI feedback overheads exists in a current feedback solution. Alternatively, P non-zero linear combination coefficients that are with largest amplitudes and that are selected and fed back by the terminal device based on the foregoing feedback manner do not include a linear combination coefficient of the transmission point. In other words, a PMI component of the transmission point does not include a linear combination coefficient that needs to be fed back, but the terminal device still needs to feed back a bitmap that corresponds to the transmission point and that indicates a location of the linear combination coefficient, where all bits in the bitmap are set to "0". However, generally, the bitmap is at a magnitude of dozens of bits, and a problem of a waste of feedback overheads still exists. Therefore, this application proposes that the terminal device may notify the network side transmission point of a port group corresponding to a PMI component fed back by the terminal device, and the network side transmission point determines, based on a mapping relationship between the port group and the transmission point, a transmission point corresponding to the PMI component, so that the network device can determine a size of the CSI. In this way, the CSI fed back by the terminal device is effectively obtained. In this way, the terminal device may flexibly feed back the CSI to the network side transmission point based on an information amount of valid CSI obtained through measurement. The network side transmission point can also determine the size of the CSI based on an indication of the terminal device. This improves CSI feedback efficiency of the terminal device, reduces unnecessary CSI feedback overheads, and improves air interface resource utilization.

FIG. 2 is a schematic flowchart of a CSI transmission method according to an embodiment of this application. It should be understood that, in the embodiment shown in FIG. 2, a port group corresponding to a transmission point is used as an example for description, and one port group includes at least one port that is of a corresponding transmission point and that is used to send a signal.

It should be understood that in specific implementation, N port groups may belong to a same radio access network device, or may belong to different radio access network devices. This is not limited in this application.

For example, each of the transmission point 101, the transmission point 102, and the transmission point 103 shown in FIG. 1 corresponds to one port group. In an example, the three transmission points are different transmission points of a same radio access network device, and three port groups (that is, N=3) corresponding to the three transmission points belong to the same radio access network device. For example, the three transmission points are different antenna panels (antenna panels) of the same radio access network device. In another example, the three transmission points are respectively different radio access network devices, and each radio access network device includes one port group. In other words, the three port groups belong to different radio access network devices.

In an implementation, the N port groups may be port groups of a plurality of radio access network devices.

For example, one of the N port groups is a port group of one radio access network device, N radio access network devices send reference signals to a terminal device through respective port groups, and the terminal device obtains, based on the received reference signals from the N radio access network devices, CSI corresponding to the N port groups. However, this application is not limited thereto. The N port groups may be the port groups of the plurality of radio access network devices, where a plurality of port groups may belong to a same radio access network device.

In another implementation, the N port groups may be port groups of one radio access network device.

For example, one of the N port groups may correspond to one antenna panel (antenna panel) of one radio access network device, and each antenna panel may include an antenna corresponding to at least one port. Alternatively, the N port groups may correspond to a plurality of distributed units (distributed units, DUs) of one radio access network device.

S201: The terminal device obtains the CSI of the N port groups, where the CSI includes first CSI of each of the N port groups.

N is an integer greater than 1. The terminal device may obtain the CSI of the N port groups based on reference signals from the N port groups. The port group may also be referred to as a reference signal port group.

For example, the terminal device may receive CSI-RSs from the N port groups, and measure the CSI-RSs from the N ports, to obtain the CSI of the N port groups.

The CSI of the N port groups that is obtained by the terminal device includes the first CSI corresponding to each port group. For example, the first CSI may include, but is not limited to, a PMI component corresponding to the port group.

S202: The terminal device sends first information and second information, where the first information includes first indication information, the second information includes first CSI of each of K port groups, and the first indication information indicates that the second information includes the first CSI of each of the K port groups.

The K port groups are a subset or a universal set of the N port groups, that is, K is a positive integer less than or equal to N.

Optionally, the first information and the second information are separately encoded, so that a network side transmission point that receives the first information and the second information may determine, based on the first indication information in the first information, that the second information includes the first CSI of each of the K port groups, for example, a PMI component corresponding to each port group, to determine an information amount of the second information (that is, a quantity of bits occupied by the second information), and obtain the first CSI of each of the K port groups in the second information through decoding.

When the terminal device does not feed back first CSI corresponding to at least one of the N port groups, bit overheads occupied by the second information can be reduced, and the network side transmission point that receives the second information and the terminal device can agree on the information amount of the second information based on the first indication information, so that the information amount of the second information can dynamically change based on a feedback status. This improves CSI reporting flexibility and air interface resource utilization.

For example, the first information may be carried on a physical uplink control channel (physical uplink control channel, PUCCH), and the second information may be carried on a physical uplink shared channel (physical uplink shared channel, PUSCH). The network side transmission point that receives the first information and the second information may first read the first information carried on the PUCCH, determine the information amount of the second information based on the first indication information, and obtain the second information from the PUSCH based on the information amount, to obtain the first CSI corresponding to each of the K port groups. However, this application is not limited thereto. Alternatively, the first information and the second information may be respectively carried on other channels, or the first information and the second information may be two pieces of information that are separately encoded but carried on a same channel.

Optionally, the terminal device determines, based on channel quality corresponding to each of the N port groups, that the second information includes first CSI corresponding to the K port groups, and/or determines that the second information does not include first CSI corresponding to R port groups, where the R port groups are port groups other than the K port groups in the N port groups, R is a positive integer, and R=N-K. In other words, the terminal device may determine, based on the channel quality corresponding to each of the N port groups, a quantity K of port groups that feed back the first CSI in the second information, or a quantity R of port groups that do not feed back the first CSI in the second information.

It should be noted that the terminal may evaluate, based on signal quality of the received reference signals from the N port groups, the channel quality corresponding to each port group, to determine that the second information includes the first CSI corresponding to the K port groups. For example, the terminal device may determine signal quality of each port group based on a reference signal sent by each of the N port groups. When signal quality of a port group is greater than or equal to a first signal quality threshold, the terminal device determines to feed back first CSI of the port group to a network, that is, the first CSI of each of the K port groups includes the first CSI of the port group. When signal quality of a port group is less than a second signal quality threshold, the terminal device determines not to feed back, to a network, first CSI corresponding to the port group, that is, the first CSI of each of the K port groups does not include the first CSI of the port group. The first signal quality threshold is greater than or equal to the second signal quality threshold, and the first signal quality threshold and the second signal quality threshold may be preconfigured in the network or predefined in a protocol.

By way of example and not limitation, the signal quality may include but is not limited to one or more of the following: RSRP, an SINR, reference signal received quality (reference signal receiving quality, RSRQ), or a received signal strength indication (received signal strength indication, RSSI).

Alternatively, the first CSI is a PMI component of one port group, and the PMI component may indicate a precoding submatrix or a channel submatrix by indicating a non-zero linear combination coefficient corresponding to a basis vector or indicating a non-zero linear combination coefficient corresponding to a basis vector pair. The non-zero linear combination coefficient may indirectly represent channel transmission quality. The terminal device may determine, based on the non-zero linear combination coefficient of the PMI corresponding to the port group, whether to feed back the PMI corresponding to the port group.

For example, the terminal device may sort non-zero linear combination coefficients of basis vectors of the N port groups based on values of amplitudes. In $X_{tot}$ non-zero linear combination coefficients with largest amplitudes, if a quantity of non-zero linear combination coefficients of basis vectors of a port group is less than a first quantity threshold, the terminal device may determine not to feed back, to the network side transmission point, first CSI corresponding to the port group, and feed back, to the network side transmission point, first CSI of a port group whose quantity of non-zero linear combination coefficients is greater than or equal to the first quantity threshold.

For example, N=3, each of the three port groups includes 32 ports, each of two polarization directions includes 16 ports, frequency domain bandwidth includes 26 subbands, and a quantity $N_{rank}$ of transmission layers for the feedback is 2. The terminal device represents a precoding submatrix of each port group by using a bilinear combination of a spatial domain basis vector and a frequency domain basis vector. Quantities of spatial domain basis vectors that are of the port groups and that are configured by the network side transmission point are respectively =, and quantities of frequency domain basis vectors that are of the port groups and that are configured by the network side transmission point are respectively =. The terminal device needs to report the PMI component of each port group to the network side transmission point, where quantities of linear combination coefficients of basis vectors of the three port groups are respectively $2*N_{rank}=216$, $2*N_{rank}=112$, and $2*N_{rank}=40$, and there is a total of 368 linear combination coefficients. The terminal device may sort non-zero linear combination coefficients in the 368 linear combination coefficients based on values of amplitudes, to obtain first $X_{tot}$ non-zero linear combination coefficients. For example, $X_{tot}$ may be 280. If all non-zero linear combination coefficients of a port group 2 that are in the 280 non-zero linear combination coefficients are less than the first quantity threshold, the terminal device determines not to feed back the non-zero linear combination coefficients of the port group 2.

A manner in which the first indication information indicates that the second information includes the first CSI corresponding to each of the K port groups may include but is not limited to the following implementations.

In an implementation 1, that the first indication information indicates that the second information includes the first CSI of each of the K port groups includes: The first indication information includes N information bits, the N information bits correspond to the N port groups, and one information bit indicates that the second information includes or does not include first CSI of a corresponding port group, where K information bits that correspond to the K port groups in the N information bits indicate that the second information includes the first CSI of each of the K port groups.

It should be noted that, that the one information bit indicates that the second information includes or does not include the first CSI of the corresponding port group means that the one information bit has a function of indicating that the second information includes the first CSI of the corresponding port group, and also has a function of indicating that the second information does not include the first CSI of the corresponding port group. However, in one implementation (that is, sending, by the terminal device, one piece of first information), the one information bit of the first indication information only indicates that the second information includes the first CSI of the corresponding port group, or the one information bit only indicates that the first CSI of the corresponding port group is not included.

By way of example and not limitation, the N information bits may be a bitmap (bitmap) including N bits.

For example, the network side transmission point configures the terminal device to measure reference signals of a port group 1, the port group 2, and a port group 3, and reports CSI of the three port groups together, that is, N=3. In this case, in a 3-bit bitmap in the first indication information, the 3 bits correspond to the three port groups, and each bit indicates that the second information includes or does not include the first CSI of the corresponding port group. For example, a 1st bit of the 3 bits corresponds to the port group 1, a 2nd bit corresponds to the port group 2, and a 3rd bit corresponds to the port group 3. That one bit indicates "1" indicates that the second information includes the first CSI of the corresponding port group, and that one bit indicates "0" indicates that the second information does not include the first CSI of the corresponding port group. The terminal device receives the reference signals from the three port groups, and obtains the CSI of the three port groups. The terminal device determines, based on channel quality of the three port groups, to feed back first CSI of the port group 1 and the port group 2 to the network side transmission point, and not to feed back first CSI of the port group 3 to the network side transmission point, that is, K=2 and R=1. In this case, the terminal device sends the first information and the second information, where the 3-bit bitmap of the first indication information in the first information is "110", that the 1st bit corresponding to the port group 1 and the 2nd bit corresponding to the port group 2 indicate "1" indicates that the second information includes the first CSI of the port group 1 and the port group 2, and that the 3rd bit corresponding to the port group 3 indicates "0" indicates that the second information does not include the first CSI of the port group 3. After receiving the first information and the second information, the network side transmission point first determines, based on the first indication information in the first information, that the second information includes first CSI of two port groups, namely, the port group 1 and the port group 2, and may determine the information amount of the second information, to obtain the first CSI of the port group 1 and the port group 2 based on the information amount. However, this application is not limited thereto. In specific implementation, that one of the N information bits indicates "0" may indicate that the second information includes the first CSI of the corresponding port group, and that one of the N information bits indicates "1" may indicate that the second information does not include the first CSI of the corresponding port group.

Optionally, a correspondence between the N information bits and the N port groups may be preconfigured by the network side transmission point for the terminal device, or may be predefined in a protocol.

In an implementation 2, that the first indication information indicates that the second information includes the first CSI of each of the K port groups includes: The first indication information includes identification information of each of the K port groups.

The network side transmission point may configure, based on configuration information, the terminal device to measure and report the CSI of the N port groups. The configuration information may include identification information of each of the N port groups. The terminal device may determine the identification information of each of the N port groups based on the configuration information. The first indication information includes identification information of a port group corresponding to first CSI included in the second information, that is, the first indication information includes identification information of the K port groups, and the identification information of the K port groups indicates that the second information includes the first CSI of each of the K port groups.

For example, the network side transmission point configures, based on the configuration information, the terminal device to measure and report CSI of the three port groups, where the configuration information may include 2-bit identification information of each of the three port groups. For example, identification information of a port group 1 is 01, identification information of a port group 2 is 10, and identification information of a port group 3 is 11. If the terminal device determines to feed back first CSI of the port group 2 and the port group 3 to the network side transmission point, and not to feed back first CSI of the port group 1 to the network side transmission point, the terminal device sends the first information and the second information. The first indication information in the first information includes the identification information "10" of the port group 2 and the identification information " 11" of the port group 3, and the first indication information does not include the identification information of the port group 1. The identification information "10" of the port group 2 and the identification information "11" of the port group 3 indicate that the second information includes first CSI of the port group 2 and the port group 3.

In an implementation 3, that the first indication information indicates that the second information includes the first CSI of each of the K port groups includes: The first indication information includes identification information of each of the R port groups, where the R port groups are port groups other than the K port groups corresponding to the first CSI included in the second information in the N port groups.

In other words, in the implementation 3, that the second information includes the first CSI of each of the K port groups is implicitly indicated.

For example, the first indication information indicates identification information of a port group that corresponds to first CSI that is not included in the second information and that is in the three port groups. Identification information of a port group 1 is 01, identification information of a port group 2 is 10, and identification information of a port group 3 is 11. If the terminal device determines to feed back first CSI of the port group 2 and the port group 3 to the network side transmission point, and not to feed back first CSI of the port group 1 to the network side transmission point, that the first indication information includes the identification information "01" of the port group 1, and does not include identification information of the port group 2 and the port group 3 indicates that the second information does not include the first CSI of the port group 1. After receiving the first information, the network side transmission point may determine, based on the first indication information, that the second information does not include the first CSI of the port group 1 in the three port groups, that is, the second information includes the first CSI of the port group 2 and the port group 3. However, this application is not limited thereto.

In an implementation 4, that the first indication information indicates that the second information includes the first CSI of each of the K port groups includes: The first indication information includes N indication fields, the N indication fields correspond to the N port groups, one indication field indicates a quantity of first parameters in first CSI corresponding to the N port groups that is included in the second information, and the first parameter is a linear combination coefficient reported in a PMI component. The indication field may directly indicate the quantity of first parameters, or may indirectly indicate the quantity of first parameters based on a parameter table defined in a protocol field and an index. A quantity of first parameters indicated by each of indication fields corresponding to the K port groups is greater than 0, and a quantity of first parameters of the R port groups is equal to 0. In the implementation 4, the terminal device does not need to additionally report a total quantity of linear combination coefficients that need to be fed back and that correspond to the N port groups.

In other words, in the implementation 4, the terminal device indicates, based on each of the N indication fields in the first indication information, a quantity of first parameters that are of a port group and that are included in the second information, and notifies the network side transmission point of that the second information includes the first CSI of each of the K port groups in the N port groups. When a quantity of first parameters indicated by an indication field corresponding to one port group is greater than 0, the second information includes first CSI corresponding to the port group. When a quantity of first parameters indicated by an indication field corresponding to one port group is 0, the second information does not include first CSI corresponding to the port group.

For example, the network configures the terminal device to measure reference signals of a port group 1, a port group 2, and a port group 3, and report CSI of the three port groups together. N=3. The first indication information includes three indication fields, where a 1st indication field corresponds to the port group 1 and indicates a quantity of non-zero linear combination coefficients in first CSI that corresponds to the port group 1 and that is included in the second information, a 2nd indication field corresponds to the port group 2 and indicates a quantity of non-zero linear combination coefficients in first CSI that corresponds to the port group 2 and that is included in the second information, and a 3rd indication

field corresponds to the port group 3 and indicates a quantity of non-zero linear combination coefficients in first CSI that corresponds to the port group 3 and that is included in the second information. For example, if the terminal device determines to feed back, to the network side transmission point, PMI components (that is, an example of the first CSI) corresponding to the port group 1 and the port group 3, and not to feed back, to the network, a PMI component corresponding to the port group 2, the terminal device sends the first information and the second information, where a quantity of non-zero linear combination coefficients indicated by the 1st indication field and the 3rd indication field in the first indication information in the first information is not 0. That the quantity of non-zero linear combination coefficients indicated by the 2nd indication field is 0 indicates that the second information does not include the PMI component corresponding to the port group 2. After receiving the first information, the network side transmission point may determine, based on the first indication information, that the second information does not include the first CSI corresponding to the port group 2, to determine the information amount of the second information, and obtain, based on the information amount, first CSI corresponding to the port group 1 and the port group 3. The terminal device does not need to additionally report a total quantity of linear combination coefficients that need to be fed back and that correspond to the three port groups.

Optionally, in this example, the first CSI includes a non-zero linear combination coefficient corresponding to a port group and indication information indicating a location of the non-zero combination coefficient. The first CSI further includes second indication information, and the second indication information indicates a basis vector for determining a precoding submatrix or a channel submatrix corresponding to the port group. For example, the second indication information indicates a spatial domain basis vector and/or a frequency domain basis vector for determining the precoding corresponding to the port group. Alternatively, the network may configure, for the terminal device, a basis vector (for example, the spatial domain basis vector and/or the frequency domain basis vector) for determining the precoding corresponding to the port group. The first CSI may not include the second indication information, and the network side transmission point and the terminal device use the basis vector that is for determining the precoding and that is configured by the network by default.

In one or more of the foregoing implementation 1, implementation 2, and implementation 4, when the terminal device determines that the first CSI corresponding to the N port groups needs to be fed back to the network side transmission point, the first indication information indicates that the second information includes the first CSI corresponding to the N port groups, that is, N=K. For example, in the implementation 1, each of the N information bits of the first indication information indicates that the second information includes the first CSI corresponding to the corresponding port group. Alternatively, in the implementation 2, that the first indication information includes the identification information of each of the N port groups indicates that the second information includes the first CSI corresponding to each of the N port groups. Alternatively, in the implementation 4, the quantity of linear combination coefficients indicated by each of the N indication fields in the first indication information is greater than 0.

It should be understood that, it may be specified in the protocol or may be configured by the network side transmission point for the terminal device that the first indication information indicated in an indication manner in the foregoing implementations indicates that the second information includes the first CSI of each of the K port groups, so that the terminal and the network side transmission point agree on the indication manner of the first indication information. For example, if the protocol specifies or the network side transmission point configures, for the terminal device, the first indication information indicated in the foregoing implementation 2, both the terminal device and a network device consider that the first indication information indicates the identification information of the K port groups corresponding to the first CSI included in the second information. For another example, if the protocol specifies or the network side transmission point configures, for the terminal device, the first indication information indicated in the foregoing implementation 3, both the terminal device and a network device consider that the first indication information indicates identification information of the R port groups, where the R port groups are port groups other than the K port groups corresponding to the first CSI included in the second information in the N port groups.

Optionally, the first information further includes second CSI corresponding to the N port groups.

By way of example and not limitation, the first CSI may be a PMI component corresponding to one port group, and the second CSI may include but is not limited to a CRI, an RI, an LI, RSRP, an SINR, or a CQI. The second CSI may be referred to as a part 1 (Part 1) of the CSI, and the first CSI may be referred to as a part 2 (Part 2) of the CSI.

The terminal device may determine, based on a configuration of the network side transmission point, a parameter included in the CSI that needs to be fed back and that corresponds to the N port groups. For example, the network side transmission point configures that the CSI corresponding to the N port groups that is fed back by the terminal device includes a CRI, an RI, a CQI, and a PMI. The terminal device may obtain, based on the reference signal from the N port groups, the CRI, the RI, and the CQI that correspond to the N port groups. The terminal device may feed back a group of a CRI, an RI, and a CQI through channels of the N port groups as a whole channel. Based on the reference signal corresponding to each of the N port groups, the PMI component corresponding to each port group is determined, and whether to feed back, to the network side transmission point, the PMI component corresponding to each port group is determined. It is determined, based on the channel quality of the port group, to feed back, to the network side transmission point, PMI components corresponding to the K port groups in the N port groups. The terminal device sends the first information and the second information to the network side transmission point, where the first information includes the CRI, the RI, and the CQI that correspond to the N port groups, and the first information further includes the first indication information. The second information includes the PMI component corresponding to each of the K port groups. The network side transmission point may obtain, based on the first information, the CRI, the RI, and the CQI that correspond to the N port groups, and determine, based on the first indication information, that the second information includes the PMI component corresponding to each of the K port groups, to determine the information amount of the second information, and obtain, based on the information amount, the PMI component that corresponds to each of the K port groups and that is in the second information. The network side transmission point may determine that PMI components that are of the R port groups and that are not fed back by the terminal device are an all zero matrix, to determine a PMI based on PMI components of the N port groups.

A PMI component that corresponds to each port group and that is in the second information indicates a precoding submatrix or a precoding matrix corresponding to the port group. Optionally, the PMI component may specifically indicate non-zero linear combination coefficients of a plurality of basis vectors or basis vector pairs corresponding to the port group. The PMI component may include third indication information, and the third indication information indicates a location of a non-zero linear combination coefficient included in the PMI component. For example, the third indication information may be a bitmap, and a quantity of bits included in the bitmap is the same as and is in one-to-one correspondence with a quantity of linear combinations of basis vectors that are for determining the precoding and that correspond to the port group. For example, that one bit in the bitmap indicates "1" indicates that a PMI component indicates a coefficient (that is, a linear combination coefficient) of a linear combination of basis vectors corresponding to the bit, and that one bit in the bitmap indicates "0" indicates that a PMI component does not indicate a linear combination coefficient corresponding to the bit; or vice versa.

It should be understood that the terminal device may separately indicate, based on each PMI component in the second information, a linear combination coefficient corresponding to each port group. However, this application is not limited thereto. Alternatively, the terminal device may indicate, based on the second information, linear combination coefficients corresponding to the K port groups together. Optionally, the PMI may alternatively include the second indication information indicating a basis vector for determining the precoding. However, this application is not limited thereto.

For example, N=3, each of the three port groups includes 32 ports, each of the two polarization directions includes 16 ports, the frequency domain bandwidth includes 26 subbands, and the quantity $N_{rank}$ of transmission layers for the feedback is 2. The terminal device represents the precoding submatrix of each port group by using the bilinear combination of the spatial domain basis vector and the frequency domain basis vector. The quantities of spatial domain basis vectors that are of the port groups and that are configured by the network side transmission point are respectively =, and the quantities of frequency domain basis vectors that are of the port groups and that are configured by the network side transmission point are respectively =. The terminal device needs to report the PMI component of each port group to the network side transmission point, where both a spatial domain basis vector and a frequency domain basis vector are indicated in a form of a combinatorial number. The bitmap indicates a location of a linear combination coefficient reported by the terminal device in the second information. A 3rd port group is used as an example. Overheads of the second information needed to report a basis vector by the terminal device are += 22*bits,* and overheads of the second information needed by a bitmap corresponding to a linear combination coefficient are 2*$N_{rank}$=40 bits.

According to the CSI transmission method provided in this embodiment of this application, if the terminal device determines not to feed back the linear combination coefficient of the 3rd port group, the second information does not need to include 62-bit overheads corresponding to a PMI component of the 3rd port group, and the network side transmission point may determine the information amount of the second information based on the first indication information (for example, overheads of the first indication information are far less than the overheads of the PMI component), to correctly decode the second information. CSI feedback overheads can be reduced. For example, in the foregoing example, feedback overheads of at least 62 bits can be reduced, and resource utilization can be improved. This resolves a problem of a waste of overheads caused by the 62-bit overheads of the PMI component corresponding to the 3rd port group that still need to be reserved in the second information for the network side transmission point to be capable of determining, when the linear combination coefficient of the 3rd port group is not fed back, a basis vector and a linear combination coefficient that correspond to each port group.

In another implementation, the terminal device may use reduced feedback overheads of the PMI components corresponding to the R port groups, to feed back PMI components of port groups with good channel quality, so that the terminal device can flexibly allocate feedback overheads corresponding to the PMI components of the K port groups. This improves feedback precision. In this way, overall PMI feedback precision is improved and a waste of feedback overheads is avoided. The first information further includes indication information indicating a quantity of linear combination coefficients included in the second information. For example, in the foregoing implementations 1 and 2, the indication information indicates a total quantity of linear combination coefficients included in the second information. The network side transmission point determines the information amount of the second information based on the first indication information and the total quantity of linear combination coefficients included in the second information. In the implementation 4, the first indication information indicates a quantity of linear combination coefficients that are of each port group and that are in the second information, and the network side transmission point may determine, based on the first indication information, the total quantity of linear combination coefficients included in the second information, to determine the information amount of the second information.

For example, the terminal device may configure, based on channel quality differences corresponding to the K port groups, values of a quantity L of spatial domain basis vectors, a quantity M of frequency domain basis vectors, and a quantity P of to-be-fed-back linear combination coefficients that correspond to the PMI component of each of the K port groups, and feed back the values to the network side transmission point based on the second information. Alternatively, a quantity L of spatial domain basis vectors and a quantity M of frequency domain basis vectors that correspond to a PMI component of each transmission point may be preconfigured by the network side transmission point for the terminal device. The terminal device may configure, based on transmission channel quality differences of the K port groups, a value of a quantity P of to-be-fed-back linear combination coefficients corresponding to the PMI component of each transmission point, and feed back the value to the network side transmission point. In this way, when overheads are fixed, overheads (that is, reduced bit overheads corresponding to the R port groups) reduced by using the method provided in this embodiment may be allocated to one or more port groups with good quality in the K port groups. For example, the terminal device may increase a quantity of linear combination coefficients that correspond to the port group and that are in the second information, so that the reduced feedback overheads are used to feed back the PMI component of the port group with good channel quality, and a quantity of feedback bits of the PMI component of the port group with good channel quality is increased. This can improve PMI component feedback precision. In this way, the overall PMI feedback precision is improved, and the waste of feedback overheads is avoided.

The network side transmission point may receive, by at least one of a plurality of transmission points corresponding to the N port groups, the first information and the second information that are sent by the terminal device.

For example, one of the N port groups corresponds to one transmission point. For example, the transmission point is a radio access network device, and one of radio access network devices corresponding to the N port groups may receive the first information and the second information. After receiving the first information and the second information, the radio access network device separately forwards CSI corresponding to corresponding port groups to other radio access network devices corresponding to the N port groups, or forwards the first information and the second information, so that the other radio access network devices can obtain the CSI corresponding to the corresponding port groups, and process to-be-transmitted data based on the CSI. Alternatively, the plurality of transmission points corresponding to the N port groups may receive the first information and the second information, and obtain, based on the first information and the second information, CSI of a port group corresponding to each transmission point. This is not limited in this application.

It should be noted that in this application, N=3 is used as an example to describe the CSI transmission method provided in this embodiment of this application. It should be understood that this application is not limited thereto. N may be an integer greater than 1, for example, 2, 3, 4, or the like. For specific implementation, refer to the foregoing implementations of this application. For brevity, details are not described again.

According to the foregoing solution, the terminal device may notify the network side transmission point of a port group corresponding to a PMI component fed back by the terminal device, and the network side transmission point determines, based on a mapping relationship between the port group and a transmission point, a transmission point corresponding to the PMI component, so that the network device can determine a size of the CSI. In this way, the CSI fed back by the terminal device is effectively obtained. In this way, the terminal device may flexibly feed back the CSI to the network side transmission point based on an information amount of valid CSI obtained through measurement. The network side transmission point can also determine the size of the CSI based on an indication of the terminal device. This improves CSI feedback efficiency of the terminal device, reduces unnecessary feedback overheads, and improves air interface resource utilization.

The foregoing describes, in detail with reference to FIG. 2, the method provided in this application. The following accompanying drawings describe a communication apparatus and a communication device provided in this application. To implement functions in the method provided in this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 3 is a schematic block diagram of a communication apparatus according to this application. As shown in FIG. 3, the communication apparatus 300 may include a transceiver unit 320.

In a possible design, the communication apparatus 300 may correspond to the terminal device in the foregoing method, may be a chip configured (or used) in the terminal device, or may be another apparatus, module, circuit, unit, or the like that can implement a method performed by the terminal device.

It should be understood that the communication apparatus 300 may include units configured to perform the method performed by the terminal device in the method shown in FIG. 2. In addition, the units in the communication apparatus 300 and the foregoing other operations and/or functions are separately used to implement corresponding procedures in the method in FIG. 2.

Optionally, the communication apparatus 300 may further include a processing unit 310. The processing unit 310 may be configured to process instructions or data, to implement a corresponding operation.

It should be further understood that when the communication apparatus 300 is the chip configured (or used) in the terminal device, the transceiver unit 320 in the communication apparatus 300 may be an input/output interface or circuit in the chip, and the processing unit 310 in the communication apparatus 300 may be a processor in the chip.

Optionally, the communication apparatus 300 may further include a storage unit 330. The storage unit 330 may be configured to store instructions or data. The processing unit 310 may execute the instructions or the data stored in the storage unit, to enable the communication apparatus to implement a corresponding operation.

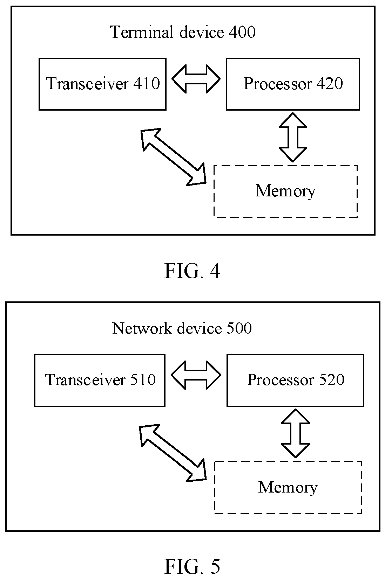

It should be understood that the transceiver unit 320 in the communication apparatus 300 may be implemented through a communication interface (for example, a transceiver or an input/output interface), for example, may correspond to a transceiver 410 in a terminal device 400 shown in FIG. 4. The processing unit 310 in the communication apparatus 300 may be implemented by using at least one processor, for example, may correspond to a processor 420 in the terminal device 400 shown in FIG. 4. Alternatively, the processing unit 310 in the communication apparatus 300 may be implemented through at least one logic circuit. The storage unit 330 in the communication apparatus 300 may correspond to a memory in the terminal device 400 shown in FIG. 4.

It should be further understood that a specific process in which the units perform the foregoing corresponding steps is described in detail in the foregoing method. For brevity, details are not described herein again.

In another possible design, the communication apparatus 300 may correspond to the transmission point in the foregoing method, for example, a chip configured (or used) in the transmission point, or another apparatus, module, circuit, unit, or the like that can implement a method performed by the transmission point.

It should be understood that the communication apparatus 300 may include units configured to perform the method performed by the transmission point in the method shown in FIG. 2. In addition, the units in the communication apparatus 300 and the foregoing other operations and/or functions are separately used to implement corresponding procedures in the method in FIG. 2.

Optionally, the communication apparatus 300 may further include a processing unit 310. The processing unit 310 may be configured to process instructions or data, to implement a corresponding operation.

It should be further understood that when the communication apparatus 300 is the chip configured (or used) in the transmission point, the transceiver unit 320 in the communication apparatus 300 may be an input/output interface or circuit in the chip, and the processing unit 310 in the communication apparatus 300 may be a processor in the chip.

Optionally, the communication apparatus 300 may further include a storage unit 330. The storage unit 330 may be configured to store instructions or data. The processing unit 310 may execute the instructions or the data stored in the storage unit, to enable the communication apparatus to implement a corresponding operation.

It should be understood that when the communication apparatus 300 is the transmission point, the transceiver unit 320 in the communication apparatus 300 may be implemented through a communication interface (for example, a transceiver or an input/output interface), for example, may correspond to a transceiver 510 in a network device 500 shown in FIG. 5. The processing unit 510 in the communication apparatus 500 may be implemented by using at least one processor, for example, may correspond to a processor 520 in the network device 500 shown in FIG. 5. The processing unit 310 in the communication apparatus 300 may be implemented through at least one logic circuit. The storage unit 330 in the communication apparatus 300 may correspond to a memory in the network device 500 shown in FIG. 5.

It should be further understood that a specific process in which the units perform the foregoing corresponding steps is described in detail in the foregoing method. For brevity, details are not described herein again.

FIG. 4 is a diagram of a structure of a terminal device 400 according to this application. The terminal device 400 may be used in the system shown in FIG. 1, to perform the functions of the terminal device in the foregoing method. As shown in FIG. 4, the terminal device 400 includes a processor 420 and a transceiver 410. Optionally, the terminal device 400 further includes a memory. The processor 420, the transceiver 410, and the memory may communicate with each other through an internal connection path, to transfer a control signal and/or a data signal. The memory is configured to store a computer program, and the processor 420 is configured to execute the computer program in the memory, to control the transceiver 410 to receive and send a signal.

The processor 420 may be configured to perform an action that is implemented inside the terminal device and that is described in the foregoing method, and the transceiver 410 may be configured to perform an action of sending by the terminal device to a transmission point or receiving by the terminal device from a transmission point that is described in the foregoing method. For details, refer to the descriptions in the foregoing method. Details are not described herein again.

Optionally, the terminal device 400 may further include a power supply, configured to supply power to various components or circuits in the terminal device.

FIG. 5 is a diagram of a structure of a network device 500 according to this application. The network device 500 may be used in the system shown in FIG. 1. For example, the network device 500 corresponds to the transmission point in the system shown in FIG. 1, and may perform a function of the transmission point in the foregoing method. As shown in FIG. 5, the network device 500 includes a processor 520 and a transceiver 510. Optionally, the network device 500 further includes a memory. The processor 520, the transceiver 510, and the memory may communicate with each other through an internal connection path, to transfer a control signal and/or a data signal. The memory is configured to store a computer program, and the processor 520 is configured to execute the computer program in the memory, to control the transceiver 510 to receive and send a signal.

The processor 520 may be configured to perform an action that is implemented inside the transmission point and that is described in the foregoing method, and the transceiver 510 may be configured to perform an action of sending by the transmission point to a terminal device or receiving by the transmission point from a terminal device that is described in the foregoing method. For details, refer to the descriptions in the foregoing method. Details are not described herein again.

Optionally, the network device 500 may further include a power supply, configured to supply power to various components or circuits in the network device.

In the terminal device shown in FIG. 4 and the network device shown in FIG. 5, the processor and the memory may be integrated into one processing apparatus. The processor is configured to execute program code stored in the memory to implement the foregoing functions. During specific implementation, the memory may alternatively be integrated into the processor, or may be independent of the processor. The processor may correspond to the processing unit in FIG. 3. The transceiver may correspond to the transceiver unit in FIG. 3. The transceiver may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in this application. The general-purpose processor may be a microprocessor, any conventional processor, or the like. The steps of the method in this application may be directly performed by a hardware processor, or may be performed by using a combination of hardware in the processor and a software module.

In this application, the memory may be a nonvolatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method according to any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

According to the method provided in this application, this application further provides a computer program product. The computer program product includes computer program code. When the computer program code is executed by one or more processors, an apparatus including the processor is enabled to perform the method shown in FIG. 2.

All or some of the technical solutions provided in this application may be implemented by using software, hardware, firmware, or any combination thereof. When the software is used to implement the technical solutions, all or some of the technical solutions may be implemented in a form of a computer program product. The computer program product includes one or more computer instructions. When the computer program instructions are loaded and executed on a computer, all or some of the procedures or functions according to the present invention are generated. The computer instructions may be stored in a computer-readable storage medium, or may be transmitted from one computer-readable storage medium to another computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the method provided in this application, this application further provides a computer-readable storage medium. The computer-readable storage medium stores program code. When the program code is run by one or more processors, an apparatus including the processor is enabled to perform the method shown in FIG. 2.

According to the method provided in this application, this application further provides a system. The system includes the foregoing one or more terminal devices. The system may further include the foregoing one or more transmission points.

In several embodiments provided in this application, it should be understood that the disclosed system, apparatus, and method may be implemented in another manner. For example, the described apparatus is merely an example. For example, the unit division is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected based on an actual requirement to achieve the objectives of the solutions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel state information CSI transmission method, comprising:

   obtaining CSI of N port groups, wherein the CSI comprises first CSI of each of the N port groups, and N is an integer greater than 1; and
   sending first information and second information, wherein the first information comprises first indication information, the second information comprises first CSI of each of K port groups, the first indication information indicates that the second information comprises the first CSI of each of the K port groups, the N port groups comprise the K port groups, and K is a positive integer less than N.

2. The method according to claim 1, wherein the first information further comprises second CSI of the N port groups.

3. The method according to claim 1 or 2, wherein that the first indication information indicates that the second information comprises the first CSI of each of the K port groups comprises:

   the first indication information comprises N information bits, the N information bits correspond to the N port groups, and one information bit indicates that the second information comprises or does not comprise first CSI of a corresponding port group, wherein
   information bits that correspond to the K port groups in the N information bits indicate that the second information comprises first CSI of each of the K port groups.

4. The method according to claim 1 or 2, wherein that the first indication information indicates that the second information comprises the first CSI of each of the K port groups comprises:

   the first indication information comprises N indication fields, the N indication fields correspond to the N port groups, one indication field indicates a quantity of first parameters in first CSI that is of a corresponding port group and that is comprised in the second information, and the first parameter is a linear combination coefficient of the port group, wherein
   a quantity of first parameters indicated by each of K indication fields corresponding to the K port groups is greater than 0.

5. The method according to claim 1 or 2, wherein that the first indication information indicates that the second information comprises the first CSI of each of the K port groups comprises:
the first indication information comprises identification information of each of the K port groups, or the first indication information comprises identification information of each of R port groups, wherein the R port groups are port groups other than the K port groups in the N port groups.

6. The method according to any one of claims 1 to 5, wherein the first information and the second information are separately encoded.

7. The method according to any one of claims 1 to 6, wherein the method further comprises:
determining, based on channel quality of each of the N port groups, that the second information comprises the first CSI of each of the K port groups.

8. The method according to any one of claims 1 to 7, wherein the first information further comprises the second CSI of the N port groups, the first CSI comprises a precoding matrix indicator PMI information component, and the second CSI comprises one or more of reference signal resource indicator CRI information, rank indicator RI information, or channel quality indicator CQI information.

9. A channel state information CSI transmission method, comprising:

receiving first information and second information, wherein the first information comprises first indication information, the second information comprises first CSI of each of K port groups, the first indication information indicates that the second information comprises the first CSI of each of the K port groups in N port groups, N is an integer greater than 1, and K is a positive integer less than N; and
determining, based on the first information, that the second information comprises the first CSI of each of the K port groups.

10. The method according to claim 9, wherein the first information further comprises second CSI of the N port groups that is in CSI.

11. The method according to claim 9 or 10, wherein that the first indication information indicates that the second information comprises the first CSI of each of the K port groups comprises:

the first indication information comprises N information bits, the N information bits correspond to the N port groups, and one information bit indicates that the second information comprises or does not comprise first CSI of a corresponding port group, wherein
information bits that correspond to the K port groups in the N information bits indicate that the second information comprises first CSI of each of the K port groups.

12. The method according to claim 9 or 10, wherein that the first indication information indicates that the second information comprises the first CSI of each of the K port groups comprises:

the first indication information comprises N indication fields, the N indication fields correspond to the N port groups, one indication field indicates a quantity of first parameters in first CSI that is of a corresponding port group and that is comprised in the second information, and the first parameter is a linear combination coefficient of the port group, wherein
a quantity of first parameters indicated by each of K indication fields corresponding to the K port groups is greater than 0.

13. The method according to claim 9 or 10, wherein that the first indication information indicates that the second information comprises the first CSI of each of the K port groups comprises:
the first indication information comprises identification information of each of the K port groups, or the first indication information comprises identification information of each of R port groups, wherein the R port groups are port groups other than the K port groups in the N port groups.

14. The method according to any one of claims 9 to 13, wherein the first information and the second information are separately encoded.

15. The method according to any one of claims 10 to 14, wherein the first information further comprises the second CSI of the N port groups, the first CSI comprises a precoding matrix indicator PMI information component, and the second CSI comprises one or more of reference signal resource indicator CRI information, rank indicator RI information, or channel quality indicator CQI information.

16. A communication apparatus, comprising:

a processing unit, configured to obtain channel state information CSI of N port groups, wherein the CSI comprises first CSI of each of the N port groups, and N is an integer greater than 1; and
a transceiver unit, configured to send first information and second information, wherein the first information comprises first indication information, the second information comprises first CSI of each of K port groups, the first indication information indicates that the second information comprises the first CSI of each of the K port groups, the N port groups comprise the K port groups, and K is a positive integer less than N.

17. The apparatus according to claim 16, wherein the first information further comprises second CSI of the N port groups that is in the CSI.

18. The apparatus according to claim 16 or 17, wherein that the first indication information indicates that the second information comprises the first CSI of each of the K port groups comprises:

the first indication information comprises N information bits, the N information bits correspond to the N port groups, and one information bit indicates that the second information comprises or does not comprise first CSI of a corresponding port group, wherein
information bits that correspond to the K port groups in the N information bits indicate that the second information comprises first CSI of each of the K port groups.

19. The apparatus according to claim 16 or 17, wherein that the first indication information indicates that the second information comprises the first CSI of each of the K port groups comprises:

the first indication information comprises N indication fields, the N indication fields correspond to the N port groups, one indication field indicates a quantity of first parameters in first CSI that is of a corresponding port group and that is comprised in the second information, and the first parameter is a linear combination coefficient of the port group, wherein
a quantity of first parameters indicated by each of K indication fields corresponding to the K port groups is greater than 0.

20. The apparatus according to claim 16 or 17, wherein that the first indication information indicates that the second information comprises the first CSI of each of the K port groups comprises:
the first indication information comprises identification information of each of the K port groups, or the first indication information comprises identification information of each of R port groups, wherein the R port groups are port groups other than the K port groups in the N port groups.

21. The apparatus according to any one of claims 16 to 20, wherein the first information and the second information are separately encoded.

22. The apparatus according to any one of claims 16 to 21, wherein
the processing unit is further configured to determine, based on channel quality of each of the N port groups, that the second information comprises the first CSI of each of the K port groups.

23. The apparatus according to any one of claims 17 to 22, wherein the first information further comprises the second CSI of the N port groups, the first CSI comprises a precoding matrix indicator PMI information component, and the second CSI comprises one or more of reference signal resource indicator CRI information, rank indicator RI information, or channel quality indicator CQI information.

24. A communication apparatus, comprising:

a transceiver unit, configured to receive first information and second information, wherein the first information comprises first indication information, the second information comprises first channel state information CSI of each of K port groups, the first indication information indicates that the second information comprises the first CSI of each of the K port groups in N port groups, N is an integer greater than 1, and K is a positive integer less than N; and
a processing unit, configured to determine, based on the first information, that the second information comprises the first CSI of each of the K port groups.

25. The apparatus according to claim 24, wherein the first information further comprises second CSI of the N port groups that is in CSI.

26. The apparatus according to claim 24 or 25, wherein that the first indication information indicates that the second information comprises the first CSI of each of the K port groups comprises:

the first indication information comprises N information bits, the N information bits correspond to the N port groups, and one information bit indicates that the second information comprises or does not comprise first CSI of a corresponding port group, wherein
information bits that correspond to the K port groups in the N information bits indicate that the second information comprises first CSI of each of the K port groups.

27. The apparatus according to claim 24 or 25, wherein that the first indication information indicates that the second information comprises the first CSI of each of the K port groups comprises:

the first indication information comprises N indication fields, the N indication fields correspond to the N port groups, one indication field indicates a quantity of first parameters in first CSI that is of a corresponding port group and that is comprised in the second information, and the first parameter is a linear combination coefficient of the port group, wherein
a quantity of first parameters indicated by each of K indication fields corresponding to the K port groups is greater than 0.

28. The apparatus according to claim 24 or 25, wherein that the first indication information indicates that the second information comprises the first CSI of each of the K port groups comprises:
the first indication information comprises identification information of each of the K port groups, or the first indication information comprises identification information of each of R port groups, wherein the R port groups are port groups other than the K port groups in the N port groups.

29. The apparatus according to any one of claims 24 to 28, wherein the first information and the second information are separately encoded.

30. The apparatus according to any one of claims 25 to 29, wherein the first information further comprises the second CSI of the N port groups, the first CSI comprises a precoding matrix indicator PMI information component, and the second CSI comprises one or more of reference signal resource indicator CRI information, rank indicator RI information, or channel quality indicator CQI information.

31. A communication apparatus, comprising a processor and a communication interface, wherein the processor uses the communication interface to perform the method according to any one of claims 1 to 8, or perform the method according to any one of claims 9 to 15.

32. A communication apparatus, comprising a processor and a memory, wherein the memory is configured to store a computer program or instructions, and the processor is configured to execute the computer program or the instructions in the memory, to perform the method according to any one of claims 1 to 8, or perform the method according to any one of claims 9 to 15.

33. A computer-readable storage medium, storing instructions, wherein when the instructions are run on a computer, the computer is enabled to perform the method according to any one of claims 1 to 8, or perform the method according to any one of claims 9 to 15.

34. A computer program product, comprising instructions, wherein when the instructions are run on a computer, the computer is enabled to perform the method according to any one of claims 1 to 8, or perform the method according to any one of claims 9 to 15.

FIG. 1

200

| S201: Obtain channel state information of N port groups, where the channel state information includes first channel state information of each of the N port groups |

| S202: Send first information and second information, where the first information includes first indication information, the second information includes first channel state information of each of K port groups, and the first indication information indicates that the second information includes the first channel state information of each of the K port groups |

FIG. 2

| Communication apparatus 300 |
| Processing unit 310 |
| Transceiver unit 320 |
| Storage unit 330 |

FIG. 3

Terminal device 400

Transceiver 410 ⟺ Processor 420

Memory

FIG. 4

Network device 500

Transceiver 510 ⟺ Processor 520

Memory

FIG. 5

## INTERNATIONAL SEARCH REPORT

| | International application No. |
|---|---|
| | **PCT/CN2023/080369** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

IPC: H04B, H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD: 信道状态信息, CSI, 协作, 多点, 传输, COMP, 端口组, 反馈, 指示, 比特, 位图, 开销, coordination, multipoint, port, group, feedback, indication, bit, TRP, TP, CQI, PMI, RI

**C. DOCUMENTS CONSIDERED TO BE RELEVANT**

| Category* | Citation of document, with indication, where appropriate, of the relevant passages | Relevant to claim No. |
|---|---|---|
| X | CN 107743042 A (HUAWEI TECHNOLOGIES CO., LTD.) 27 February 2018 (2018-02-27) abstract, and description, paragraphs 0092-0136 and 0222-0263, and figure 1-figure 4b | 1-34 |
| X | CN 102377469 A (ZTE CORP.) 14 March 2012 (2012-03-14) abstract, and description, paragraphs 0019-0059 | 1-34 |
| A | JP 2019092203 A (FUJITSU CONNECTED TECHNOLOGIES LTD.) 13 June 2019 (2019-06-13) entire document | 1-34 |
| A | CN 106656292 A (CHINA ACADEMY OF TELECOMMUNICATIONS TECHNOLOGY) 10 May 2017 (2017-05-10) entire document | 1-34 |

☐ Further documents are listed in the continuation of Box C.   ☑ See patent family annex.

| * Special categories of cited documents: | "T" | later document published after the international filing date or priority date and not in conflict with the application but cited to understand the principle or theory underlying the invention |
|---|---|---|
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **09 June 2023** | **19 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/080369**

| Patent document cited in search report | | | Publication date (day/month/year) | Patent family member(s) | | | Publication date (day/month/year) |
|---|---|---|---|---|---|---|---|
| CN | 107743042 | A | 27 February 2018 | US | 2019173549 | A1 | 06 June 2019 |
| | | | | EP | 3496288 | A1 | 12 June 2019 |
| | | | | WO | 2018028687 | A1 | 15 February 2018 |
| CN | 102377469 | A | 14 March 2012 | WO | 2012151988 | A1 | 15 November 2012 |
| JP | 2019092203 | A | 13 June 2019 | | None | | |
| CN | 106656292 | A | 10 May 2017 | WO | 2017071674 | A1 | 04 May 2017 |
| | | | | US | 2018316405 | A1 | 01 November 2018 |
| | | | | EP | 3370348 | A1 | 05 September 2018 |

Form PCT/ISA/210 (patent family annex) (July 2022)

## REFERENCES CITED IN THE DESCRIPTION

**Patent documents cited in the description**

- CN 202210271156